# EUROPÄISCHE PATENTSCHRIFT

(11) **EP 2 726 238 B1**
(45) Veröffentlichungstag und Bekanntmachung des Hinweises auf die Patenterteilung: **08.05.2019**
(21) Anmeldenummer: 12743058.5
(22) Anmeldetag: 13.06.2012
(51) Int. Cl.: B23B 31/00

(54) **SPANNFUTTER**
CHUCK
MANDRIN DE SERRAGE

(30) Priorität: 29.06.2011 DE 202011103203 U
(43) Veröffentlichungstag der Anmeldung: 07.05.2014
(73) Patentinhaber: Gühring KG, 72458 Albstadt (DE)
(72) Erfinder: AYGÜN, Hakki, 72505 Göggingen-Krauchenwies (DE)
(74) Vertreter: Westphal, Mussgnug & Partner Patentanwälte mbB
(86) Internationale Anmeldenummer: PCT/DE2012/100177
(87) Internationale Veröffentlichungsnummer: WO 2013/000457

(56) Entgegenhaltungen:
- EP-A1- 0 164 582
- WO-A1-95/26247
- DE-A1-102006 016 290
- DE-U1- 9 109 821
- DE-U1-202006 009 555
- JP-A- 2011 036 930
- US-A- 3 542 354
- US-A- 4 422 653
- US-A1- 2006 131 820

## Beschreibung

Die Erfindung betrifft ein Spannfutter für eine Werkzeugmaschine mit den Merkmalen des Oberbegriffs des Anspruchs 1. Ein solches Spannfutter ist aus US 2006/0131820 A bekannt.

In derartigen Spannfuttern können unterschiedliche Werkzeuge, die in eine Aufnahmeöffnung im Körper des Spannfutters eingeführt werden können, kraftschlüssig fixiert werden, um dann mit ihnen eine Materialbearbeitung durchzuführen. Sie sind sowohl für stehende Bearbeitung als auch für drehende Bearbeitung, bei der das Werkzeug üblicherweise in rotierende Bewegung versetzt wird, geeignet.

In der nachfolgenden Offenbarung werden die Begriffe "axial" und "radial" relativ zur Erstreckungsrichtung der Aufnahmeöffnung in Arbeitsrichtung, die bei rotierenden Werkzeugen üblicherweise mit der Drehachse dieser rotierenden Bewegung zusammenfällt, verwendet.

Die Fixierung des jeweiligen Werkzeugs wird dabei in der Regel dadurch bewirkt, dass durch eine lokale Verformung der Wandung der Aufnahmeöffnung das Werkzeug innerhalb der Aufnahmeöffnung festgeklemmt wird. Dies kann beispielsweise erreicht werden, wenn innerhalb des Körpers des Spannfutters eine Kammer vorgesehen wird, in die eine Hydraulikflüssigkeit unter so hohem Druck hineingepresst werden kann, dass eine Trennwand zwischen Kammer und Aufnahmeöffnung reversibel in radialer Richtung verformt wird, so dass sich der Querschnitt der Aufnahmeöffnung reduziert und das in diese eingesetzte Werkzeug festgeklemmt wird.

Allerdings sind hierfür hohe Drücke nötig, die zudem in Abhängigkeit vom Querschnitt der Aufnahmeöffnung variieren. Werden für Aufnahmeöffnungen mit einem 8mm-Querschnitt typischerweise Drücke von 120000000 Pa (1200 bar) bis 150000000 Pa (1500 bar) benötigt, steigt dies für einen 3mm-Querschnitt bis auf 400000000 Pa (4000 bar) bis 500000000 Pa (5000 bar) an. Dies kann dazu führen, dass der Bereich elastischer Deformationen verlassen wird und plastische Deformationen einsetzen. Die auf diese Weise herbeiführbare Querschnittsreduktion ist somit begrenzt.

Aus dem Stand der Technik ist es bekannt, dieses Problem zu umgehen, indem in der Aufnahmeöffnung des Spannfutters eine Reduzierhülse angeordnet wird. Dadurch wird die Notwendigkeit, mit kleinen Querschnitten und extrem hohen Drücken zu arbeiten vermieden. Die Reduzierhülse kann in der Regel, wie das Werkzeug selbst, ausgetauscht und somit z. B. an den Werkzeugdurchmesser angepasst werden. Problematisch dabei ist allerdings, dass Rundlaufabweichungen auftreten können, und zwar umso stärker, je länger Spannfutter und Werkzeug sind. Es können sich Rundlauffehler von Spannfutter und Reduzierhülse aufaddieren. Ein Beispiel für derartige Spannfutter lehrt z. B. die DE 94 112 60.

Aus der US 2006/0131820 A1 ist ein Spannfutter von einer Werkzeugmaschine mit einer im Körper des Spannfutters angeordneten Aufnahme mit einer Aufnahmeöffnung zum axialen Einsetzen eines Schaftwerkzeugs, einer zumindest abschnittsweise in der zentralen Aufnahme angeordneten Reduzierhülse und einer Spannvorrichtung zur zumindest lokalen Reduktion des Querschnitts der zentralen Aufnahme bekannt, die weiter eine Fixiervorrichtung aufweist, welche eine definierte Anordnung der Reduzierhülse relativ zur Aufnahmeöffnung sowohl bei gespanntem Spannfutter als auch bei ungespanntem Spannfutter vorgibt. Weitere Spannfutter für Werkzeugmaschinen sind aus der DE 20 2006 009 555 U1, der US 3 542 354 A sowie der EP 0 164 582 A1 bekannt.

Aus der US 4 422 653 ist ein Spannfutter mit einer zylindrischen Werkstückaufnahme bekannt, das einen Mantel und einen Werkstückgreifer aufweist, zwischen denen eine belastbare, gummiähnliche Hülse sandwichartig angeordnet ist. Dabei sind Mantel und Greifelement teilweise in Längsstreifen segmentiert, sodass das Werkstückgreifelement insgesamt diametral dehnbar und kontrahierbar ist und sich bei Aufnahme eines Werkstücks mit einer exzentrischen Oberfläche automatisch so anpasst, dass gleicher Druck an allen Punkten der Werkstückoberfläche ausgeübt wird.

Die Aufgabe der Erfindung besteht somit darin, ein verbessertes Spannfutter mit einer Reduzierhülse bereitzustellen.

Diese Aufgabe wird gelöst durch ein Spannfutter mit den Merkmalen des Patentanspruchs 1. Vorteilhafte Ausgestaltungen der Erfindung sind Gegenstand der Unteransprüche. Das erfindungsgemäße Spannfutter, ist ausgeführt als Dehnspannfutter, besonders bevorzugt als Hydrodehnspannfutter, für ein Werkzeugmaschine, weist eine im Körper des Spannfutters angeordnete zentrale Aufnahme mit einer Aufnahmeöffnung zum axialen Einsetzen eines Schaftwerkzeugs, eine zumindest abschnittsweise in der zentralen Aufnahme angeordnete Reduzierhülse und eine Spannvorrichtung zur zumindest lokalen Reduktion des Querschnitts der zentralen Aufnahme auf.

Erfindungswesentlich ist, dass eine Fixiervorrichtung vorgesehen ist, welche eine definierte Anordnung der Reduzierhülse relativ zur Aufnahmeöffnung sowohl bei gespanntem Spannfutter als auch bei ungespanntem Spannfutter vorgibt.

Der Begriff "definierte Anordnung" wird dabei in dem Sinne verwendet, dass er nicht nur eine punktgenaue Fixierung umfasst, sondern auch eine relative Beweglichkeit zueinander in gewissen Grenzen umfasst, wie es beispielsweise der Fall ist, wenn ein Stift in einem Langloch geführt ist oder wenn eine elastische Dämpfung einer Relativbewegung vorhanden ist, die umso stärker wird, je mehr die relativ zueinander definiert angeordneten Teile von einer Sollposition abweichen.

Eine Fixierung kann beispielsweise durch Schrauben, Klemmen, Verstiften oder Kleben herbeigeführt werden.

Durch das Vorsehen einer derartigen Fixiervorrichtung wird sichergestellt, dass Reduzierhülse und Aufnahmeöffnung bereits bei der Herstellung des Spannfutters relativ zueinander justiert werden können und in dieser justierten Anordnung verbleiben. Als bevorzugtes Kriterium für die Justage bzw. für den als optimale Anordnung vorgesehenen Zustand wird dabei eine Anordnung angesehen, in der der Augleich von Exzentrizitäten dieser Bauteile bestmöglich erzielt wird. Dies führt dazu, dass die Anforderungen an die Rundlaufgenauigkeit, die durch DIN 69882 vorgegeben sind, um einen Faktor vier übertroffen werden können.

In einer bevorzugten Weiterbildung der Erfindung tragen die Reduzierhülse und/oder das Spannfutter eine Markierung, die die bevorzugte Relativposition von Reduzierhülse und Aufnahmeöffnung kennzeichnet. Diese Markierung, die vorteilhafterweise während des Fertigungsprozesses angebracht wird, erlaubt es, zu jedem Zeitpunkt zu überprüfen, ob die optimierten Rundlaufeigenschaften noch gegeben sind oder nicht, z.B. weil die Fixiervorrichtung im Betrieb beschädigt wurde.

Bei einer Fixiervorrichtung ist eine Verdrehsicherung vorgesehen, die ein Verdrehen der Reduzierhülse in der Aufnahmeöffnung verhindert. Auch ein Verschieben der Reduzierhülse in der Aufnahmeöffnung sollte möglichst effektiv vermieden werden, was z.B. durch das Vorsehen einer axialen Sicherung erreicht werden kann.

Es hat sich jedoch gezeigt, dass sowohl die Verdrehsicherung als auch die axiale Sicherung vorzugsweise so ausgestaltet sind, dass die Begrenzung des Verdrehens oder Verschiebens elastisch erfolgt. Konkret kann dies beispielsweise dadurch erfolgen, dass die Reduzierhülse über einen O-Ring aus einem elastischen Material mit Druck belastet wird. Damit ist bei einem Wirken entsprechender Kräfte durchaus eine begrenzte Beweglichkeit gegeben, die bei einem harten Anschlag nicht gegeben wäre.

Eine alternative, besonders bevorzugte Möglichkeit, eine elastische Begrenzung des Verdrehens oder Verschiebens der Reduzierhülse zu gewährleisten ist eine frei schwimmende Lagerung der Reduzierhülse.

Im Hinblick auf die axiale Verschiebbarkeit ist diese besonders gut dadurch zu erreichen, dass die Reduzierhülse auf ihrer der Oberfläche der Aufnahmeöffnung zugewandten Seite Nuten aufweist, die sich ausgehend von beiden Stirnseiten der Reduzierhülse parallel zur Rotationsachse der Reduzierhülse erstrecken, aber nicht ineinander übergehen. Somit bilden die Nuten jeweils an ihrer dem Mittelabschnitt der Reduzierhülse zugewandten Ende eine Sackgasse. Bei der schwimmenden Lagerung in einem Öl oder in Kühlmittel für das Werkzeug tritt dieses in die Nuten ein und die Wechselwirkung der Flüssigkeit mit den sackgassenartigen Enden dämpft etwaige Bewegungen der Reduzierhülse effektiv. Dies gilt insbesondere dann, wenn gleichzeitig auf das Vorsehen von Schmutzrillen an der Innenfläche der Werkzeugaufnahme verzichtet wird.

Besonders vorteilhaft ist es, wenn am Spannfutter dass eine Peripheriekühlung für das Schaftwerkzeug vorgesehen ist, um übermäßige Hitzeentwicklung am Werkzeug zu vermeiden und den Abtransport von Spänen zu verbessern. Dies erhöht die Prozesssicherheit beim Zerspanen. Besonders günstig ist es, wenn die Peripheriekühlung geführt ist und auf das spanende Werkzeug läuft. Noch günstiger sind Gyrojet-Periheriekühlungen, bei denen eine parallele Strahlführung an Schaft und Schneide des Werkzeugs entlang gewährleistet ist.

Vorteilhaft für die Realisierung einer effektiven Kühlung ist es ferner, wenn das Spannmittel und/oder die Reduzierhülse einen oder mehrere Schlitze, eine oder mehrere Bohrungen oder eine oder mehrere Öffnungen aufweisen, um den Durchtritt von Kühlmittel zu erlauben. Insbesondere sind diese Schlitze bevorzugt an der Innenseite der Redzuzierhülse angeordnet. Ihr Querschnitt kann frei an die jeweiligen Bedingungen angepasst sein, insbesondere kann er rund, quadratisch, rechteckig, U-förmig oder tropfenförmig sein.

Eine besonders bevorzugte Ausgestaltung der Erfindung besteht darinm dass das Fixiermittel ein mit einer Durchführöffnung für das Schaftwerkzeug versehener Deckel ist, welcher die Seite des Spannfutters, an der die Aufnahmeöffnung vorgesehen ist, übergreift, so dass die Reduzierhülse in der zentralen Aufnahme fixiert ist, und dass der Deckel am Körper des Spannfutters befestigt ist.

Das Vorsehen eines so ausgestalteten Deckels bringt eine Reihe wesentlicher Vorteile mit sich: Einerseits erlaubt er eine signifikante Reduktion auftretender Rundlaufabweichungen, weil die Reduzierhülse bei Herstellung des Spannfutters optimal justiert und in dieser Position fixiert werden kann. Dies erleichtert insbesondere das Arbeiten mit langen Spannfuttern und langen Werkzeugen.

Andererseits wird das Spannverhalten des Spannfutters positiv beeinflusst. Dies liegt insbesondere daran, dass systembedingt durch eine radiale Ausdehnung des Spannfutters durch Wechselwirkung zwischen der Verformung des Körpers des Spannfutters und dem Spannfutter eine Erhöhung der radialen Vorspannkraft bewirkt wird.

Vorteilhafterweise wird beim Spannfutter der Deckel unlösbar, insbesondere klemmend, aufgeschrumpft, geschweißt, gelötet oder formschlüssig gerastet, am Spannfutter befestigt. Dies stellt sicher, dass eine einmal vorgenommene Minimierung der Rundlaufabweichung erhalten bleibt. Vorteilhaft ist weiterhin, wenn alternativ oder noch besser kumulativ zu dieser Maßnahme der Deckel über ein Dämpfungselement mit der Reduzierhülse verbunden ist, was diesen Effekt ebenfalls bewirken bzw. verstärken kann.

In einem besonders vorteilhaften Spannfutter ist der Deckel aus einem Werkstoff mit anderen, insbesondere einer höheren Festigkeit als der Werkstoff, aus dem Körper des Spannfutters und/oder die Reduzierhülse bestehen. Dadurch kann eine höhere Spannkraft erreicht werden.

Eine Verbesserung der Verschleißfestigkeit wird dadurch erzielt, dass der Deckel beschichtet ist, insbesondere PVDbeschichtet ist. Insbesondere haben sich goldfarbene Deckel, z.B. mit TiN-Beschichtung als besonders geeignet erwiesen. Auch andere, kontrastfarbene Beschichtungen sind vorteilhaft.

Eine besonders gute Halterung des Werkzeugs kann dadurch erzielt werden, dass die Reduzierhülse als Spannzange ausgebildet ist.

Wird am Spannfutter, genauer an dessen Körper oder an der Reduzierhülse eine Spannschulter vorgesehen, kann die im Körper des Spannfutters auftretende radiale Spreizung vorteilhaft so umgeleitet werden, dass eine axiale Vorspannung durch den Deckel erzielt wird.

Vorteilhaft ist dabei insbesondere, wenn der Deckel eine oder mehrere, insbesondere düsenartige, Öffnungen für den Kühlmittelstrahl aufweist. Dies eröffnet insbesondere die Möglichkeit, durch die Ausgestaltung dieser Öffnungen sicherzustellen, dass eine gewünschte Kühlmittelstrahlgeometrie eingestellt wird. Vorteilhaft ist dabei insbesondere die Bereitstellung eines Ringspalts mit einer radialen Ausdehnung zwischen 0,1mm und 1,5mm oder von Bohrungen mit einem Durchmesser zwischen 0,2mm und 2,5mm.

Besonders vorteilhaft ist ferner, wenn das Spannfutter ein Stellelement zur Längenverstellung der Werkzeugaufnahme an der Reduzierhülse oder am Futtergrundkörper angeordnet ist.

Die Erfindung wird nachfolgend anhand einer Figur näher erläutert.

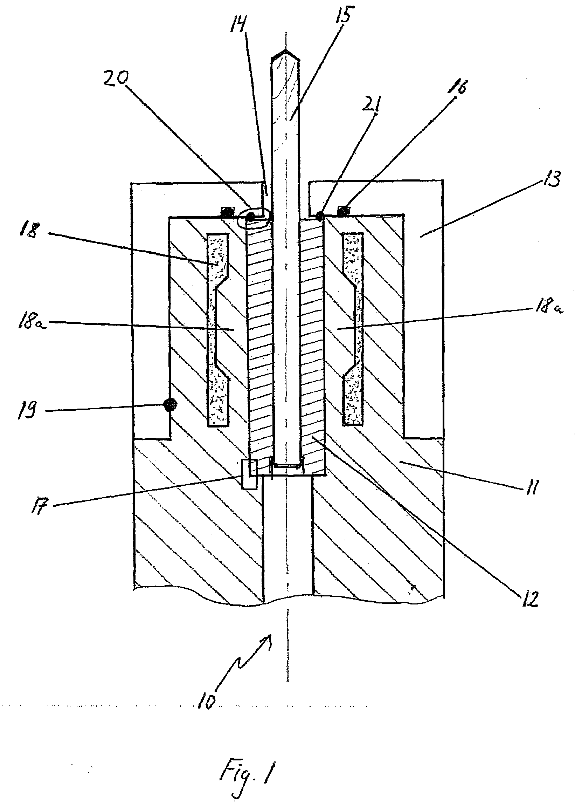

Die Figur zeigt einen Querschnitt durch ein Spannfutter. Das Spannfutter 10 weist einen Körper 11 auf. Ein nicht zum Spannfutter 10 gehörendes Schaftwerkzeug 15 ist axial, insbesondere auf einer Achse, um die das Spannfutter 10 bei Betrieb einer nicht dargestellten Werkzeugmaschine, an der das Spannfutter 10 angeordnet ist, rotiert, in eine in einer im Körper 11 des Spannfutters 10 aufgenommene Aufnahme angeordneten Reduzierhülse 12 eingeführt, so dass die Aufnahme durch die Reduzierhülse 12 und den eingeführten Abschnitt das Schaftwerkzeugs 15 im Wesentlichen ausgefüllt ist. Die Reduzierhülse 12 ist mit einer Verdrehsicherung 17 gegen Verdrehen gesichert.

Als Spannvorrichtung 18 ist im Körper 1 eine ringförmig umlaufende Druckkammer angeordnet. Um das eingeführte Schaftwerkzeug 15 zu fixieren, kann diese Druckkammer mit unter einem Druck von einigen 100000000 Pa stehender Hydraulikflüssigkeit befüllt werden, was zu insbesondere einer elastischen Deformation der Wandabschnitte 18a führt, die den Querschnitt der Aufnahme verringert und dadurch ein Festklemmen der Reduzierhülse 12 und des in diese eingeführten Schaftwerkzeugs 15 bewirkt.

Ein mit einer Durchführöffnung für das Schaftwerkzeug 15 versehener, becherförmiger Deckel 13 übergreift die Seite des Körpers 11 des Spannfutters 10, an der die Aufnahmeöffnung vorgesehen ist, und zwar, so dass die Reduzierhülse 12 in der zentralen Aufnahme fixiert ist. Die Verbindung zwischen Deckel 13 und Reduzierhülse 12 ist in der dargestellten Ausführungsform über ein Dämpfungselement 21 hergestellt. Der Deckel 13 ist am Körper 11 des Spannfutters 10 durch Schweißpunkte wie den exemplarisch dargestellten Schweißpunkt 19 befestigt. Durch den Druck der Hydraulikflüssigkeit hervorgerufene elastische Deformationen des Körpers 11 des Spannfutters 10 werden wegen der Befestigung auf den Deckel 13 übertragen, wodurch eine Erhöhung und richtungsmäßige Beeinflussung der auftretenden Spannkräfte bewirkt wird.

Das dargestellte Spannfutter 10 ist dafür ausgelegt, eine Peripheriekühlung des Schaftwerkzeugs 15 zu ermöglichen. Daher ist es wesentlich, an Stellen, an denen ein Eindringen des Kühlmittels zwischen Deckel 13 und Körper 11 des Spannfutters 10 Dichtungen 16, die beispielsweise als O-Ring ausgeführt werden können, vorzusehen.

Um ein Austreten des Kühlmittels auf das Schaftwerkzeug zu erreichen, ist ein ringförmiger Austrittsspalt 14 zwischen Schaftwerkzeug 15 und Deckel 13 vorgesehen. In den Bereich des Austrittspalts kann Kühlmittel insbesondere gelangen, wenn es durch Spalte oder Kanäle im Körper 11 des Spannfutters 10 und/oder der Reduzierhülse 12 in den Bereich 20 zwischen Deckel 13 einerseits und Körper 11 und/oder Reduzierhülse 12 andererseits geleitet wird.

### Bezugszeichenliste

- 10: Spannfutter
- 11: Körper
- 12: Reduzierhülse
- 13: Deckel
- 14: Austrittsspalt
- 15: Schaftwerkzeug
- 16: Dichtung
- 17: Verdrehsicherung
- 18: Spannvorrichtung
- 18a: Wandabschnitte
- 19: Schweißpunkt
- 20: Bereich
- 21: Dämpfungselement

## Patentansprüche

1. Spannfutter (10) für eine Werkzeugmaschine, das als Dehnspannfutter ausgeführt ist, mit
einer im Körper (11) des Spannfutters (10) angeordneten Aufnahme mit einer Aufnahmeöffnung zum axialen Einsetzen eines Schaftwerkzeugs (15),
einer zumindest abschnittsweise in der zentralen Aufnahme angeordneten Reduzierhülse (12) und
einer Spannvorrichtung (18) zur zumindest lokalen Reduktion des Querschnitts der zentralen Aufnahme, wobei eine Fixiervorrichtung vorgesehen ist, welche eine definierte Anordnung der Reduzierhülse (12) relativ zur Aufnahmeöffnung sowohl bei gespanntem Spannfutter (10) als auch bei ungespanntem Spannfutter (10) vorgibt,
wobei die Fixiervorrichtung eine Verdrehsicherung (17) aufweist, die ein Verdrehen der Reduzierhülse (12) in der Aufnahmeöffnung begrenzt, und/oder wobei die Fixiervorrichtung eine axiale Sicherung aufweist, die ein Verschieben der Reduzierhülse (12) in der Aufnahmeöffnung begrenzt **dadurch gekennzeichnet, dass** die Begrenzung des Verdrehens oder Verschiebens der Reduzierhülse (12) in der Aufnahmeöffnung elastisch erfolgt.

2. Spannfutter (10) nach Anspruch 1,
**dadurch gekennzeichnet, dass** in der definierten Anordnung der Reduzierhülse (12) relativ zur Aufnahmeöffnung Exzentrizitäten von Reduzierhülse und Aufnahmeöffnung oder Spannfutter (10) ausgleichend aufeinander abgestimmt sind.

3. Spannfutter (10) nach Anspruch 2,
**dadurch gekennzeichnet, dass** die Reduzierhülse (12) und/oder das Spannfutter (10) eine Markierung aufweisen, anhand der die Anordnung, in der die Exzentrizitäten aufeinander abgestimmt sind, identifizierbar ist.

4. Spannfutter (10) nach Anspruch 1,2 oder 3,
**dadurch gekennzeichnet, dass** die Reduzierhülse (12) frei schwimmend gelagert ist.

5. Spannfutter (10) nach Anspruch 4,
**dadurch gekennzeichnet, dass** die Reduzierhülse auf ihrer der Oberfläche der Aufnahmeöffnung zugewandten Seite Nuten aufweist, die sich ausgehend von beiden Stirnseiten der Reduzierhülse parallel zur Rotationsachse der Reduzierhülse erstrecken, aber nicht ineinander übergehen.

6. Spannfutter (10) nach einem vorstehenden Anspruch,
**dadurch gekennzeichnet, dass** eine Peripheriekühlung für das Schaftwerkzeug (15) vorgesehen ist.

7. Spannfutter (10) nach Anspruch 6,
**dadurch gekennzeichnet, dass** die Peripheriekühlung geführt ist und düsenartig auf das Schaftwerkzeug (15) gelenkt wird.

8. Spannfutter (10) nach Anspruch 7,
**dadurch gekennzeichnet, dass** ein für die Peripheriekühlung vorgesehenes Kühlmittel parallel an Schaft und Schneide des Schaftwerkzeugs entlang geführt wird.

9. Spannfutter (10) nach einem der Ansprüche 6 bis 8,
**dadurch gekennzeichnet, dass** die Spannvorrichtung (18) und/oder die Reduzierhülse (12) einen oder mehrere Schlitze, eine oder mehrere Bohrungen oder eine oder mehrere Öffnungen aufweisen, um den Durchtritt von Kühlmittel zu erlauben.

10. Spannfutter (10) nach einem vorstehenden Anspruch,
**dadurch gekennzeichnet, dass** die Fixiervorrichtung ein mit einer Durchführöffnung für das Schaftwerkzeug (15) versehener Deckel (13) ist, der die Seite des Spannfutters (10), an der die Aufnahmeöffnung vorgesehen ist, übergreift, so dass die Reduzierhülse (12) in der zentralen Aufnahme fixiert ist, und dass der Deckel (13) am Körper (11) des Spannfutters (10) befestigt ist.

11. Spannfutter (10) nach Anspruch 10,
**dadurch gekennzeichnet, dass** der Deckel (13) unlösbar, insbesondere klemmend, aufgeschrumpft, geschweißt, gelötet oder formschlüssig gerastet, am Körper (11) des Spannfutters (10) befestigt ist.

12. Spannfutter (10) nach Anspruch 10 oder 11,
**dadurch gekennzeichnet, dass** der Deckel (13) aus einem Werkstoff mit einer höheren Festigkeit als der Körper (11) des Spannfutters (13) und/oder als die Reduzierhülse (12) besteht.

13. Spannfutter (10) nach einem der Ansprüche 10 bis 12,
**dadurch gekennzeichnet, dass** der Deckel (13) goldfarben, insbesondere mit TiN beschichtet, oder kontrastfarben ist.

14. Spannfutter (10) nach einem vorstehenden Anspruch,
**dadurch gekennzeichnet, dass** ein Stellelement zur Längenverstellung der Werkzeugaufnahme an der Reduzierhülse (12) oder am Futtergrundkörper angeordnet ist.

## Claims

1. A clamping chuck (10) for a machine tool, the clamping chuck (10) being an expansion clamping chuck having
a receptacle which is arranged in the body (11) of the clamping chuck (10) and which has a receiving opening for the axial insertion of a shank-type tool (15),
a reducing sleeve (12) arranged at least in sections in the central receptacle, and
a clamping device (18) for the at least local reduction of the cross section of the central receptacle,
wherein a fixing device is provided which prescribes a defined arrangement of the reducing sleeve (12) relative to the receiving opening both when the clamping chuck (10) is clamped and also when the clamping chuck (10) is not clamped,
wherein the fixing device has an anti-twist securing means (17) which limits a twisting motion of the reducing sleeve (12) in the receiving opening, and/or wherein the fixing device has an axial securing means which limits a displacement of the reducing sleeve (12) in the receiving opening,
**characterized in that** the limitation of the twisting or displacement of the reducing sleeve (12) in the receiving opening is realized with elastic action.

2. The clamping chuck (10) as claimed in claim 1,
**characterized in that**, in the defined arrangement of the reducing sleeve (12) relative to receiving opening, eccentricities of reducing sleeve and receiving opening or clamping chuck (10) are coordinated with one another in compensatory fashion.

3. The clamping chuck (10) as claimed in claim 2,
**characterized in that** the reducing sleeve (12) and/or the clamping chuck (10) have a marking, on the basis of which the arrangement in which the eccentricities are coordinated with one another can be identified.

4. The clamping chuck (10) as claimed in one of claims 1 to 3,
**characterized in that** the reducing sleeve (12) is mounted in a freely floating manner.

5. The clamping chuck (10) as claimed in claim 4,
**characterized in that** the reducing sleeve, on its side facing toward the surface of the receiving opening, has grooves which extend parallel to the axis of rotation of the reducing sleeve proceeding from the two face sides of the reducing sleeve but which do not merge into one another.

6. The clamping chuck (10) as claimed in one of claims 1 to 5,
**characterized in that** peripheral cooling for the shank-type tool (15) is provided.

7. The clamping chuck (10) as claimed in claim 6,
**characterized in that** the peripheral cooling is directed and is diverted in nozzle-like fashion onto the shank-type tool (15) .

8. The clamping chuck (10) as claimed in claim 7,
**characterized in that** a coolant provided for the peripheral cooling is directed in parallel along shank and cutting edge of the shank-type tool.

9. The clamping chuck (10) as claimed in one of claims 6 to 8,
**characterized in that** the clamping device (18) and/or the reducing sleeve (12) have one or more slots, one or more bores or one or more openings for permitting the passage of coolant.

10. The clamping chuck (10) as claimed in one of claims 1 to 9,
**characterized in that** the fixing device is a cover (13) which is provided with a leadthrough opening for the shank-type tool (15), which cover engages over that side of the clamping chuck (10) on which the receiving opening is provided such that the reducing sleeve (12) is fixed in the central receptacle, and that the cover (13) is fastened to the body (11) of the clamping chuck (10).

11. The clamping chuck (10) as claimed in claim 10,
**characterized in that** the cover (13) is fastened non-detachably by clamping, shrink-fitting, welding or brazing or with positively locking detent action, to the body (11) of the clamping chuck (10).

12. The clamping chuck (10) as claimed in one of claims 10 or 11,
**characterized in that** the cover (13) is composed of a material with a higher strength than the body (11) of the clamping chuck (13) and/or than the reducing sleeve (12).

13. The clamping chuck (10) as claimed in one of claims 10 to 12,
**characterized in that** the cover (13) is of gold color coated with TiN, or of contrasting color.

14. The clamping chuck (10) as claimed in one of claims 1 to 14,
**characterized in that** an actuating element for the longitudinal adjustment of the tool receptacle is arranged on the reducing sleeve (12) or on the chuck main body.

## Revendications

1. Mandrin de serrage (10) destiné à une machine-outil qui est réalisé sous la forme d'un mandrin expansible, comportant un logement situé dans le corps (11) du mandrin (10), ayant une ouverture de réception permettant l'introduction axiale de l'arbre (15) d'un outil,
une douille de réduction (12) située au moins par segments dans le logement central, et
un dispositif de serrage (18) permettant de réduire au moins localement la section du logement central,
mandrin dans lequel il est prévu un dispositif de fixation qui fixe un agencement défini de la douille de réduction (12) par rapport à l'ouverture de réception lorsque le mandrin (10) est serré et également lorsque le mandrin (10) est desserré,
le dispositif de fixation comprenant un dispositif de sécurité anti-rotation (17) qui limite la rotation de la douille de réduction (12) dans l'ouverture de réception, et/ou le dispositif de fixation comprenant une sécurité axiale qui limite le coulissement de la douille de réduction (12) dans l'ouverture de réception,
**caractérisé en ce que**
la limitation de la rotation ou du coulissement de la douille de réduction (12) s'effectue élastiquement dans l'ouverture de réception.

2. Mandrin de serrage (10) conforme à la revendication 1,
**caractérisé en ce que**
dans l'agencement défini de la douille de réduction (12) par rapport à l'ouverture de réception, des excentricités de la douille de réduction et de l'ouverture de réception ou du mandrin (10) sont adaptées en étant compensées.

3. Mandrin de serrage (10) conforme à la revendication 2,
**caractérisé en ce que**
la douille de réduction (12) et/ou le mandrin (10) comporte(nt) un repère sur la base duquel l'agencement dans lequel les excentricités sont adaptées peut être identifié.

4. Mandrin de serrage (10) conforme à la revendication 1, 2 ou 3,
**caractérisé en ce que**
la douille de réduction (12) est montée librement flottante.

5. Mandrin de serrage (10) conforme à la revendication 4,
**caractérisé en ce que**
la douille de réduction comporte, sur sa face tournée vers la surface de l'ouverture de réception, des rainures qui, s'étendent parallèlement à l'axe de rotation de la douille de réduction à partir des deux faces frontales de la douille de réduction mais ne se confondent pas.

6. Mandrin de serrage (10) conforme à l'une des revendications précédentes,
**caractérisé en ce qu'**
il est prévu un dispositif de refroidissement périphérique de l'arbre (15) de l'outil.

7. Mandrin de serrage (10) conforme à la revendication 6,
**caractérisé en ce que**
le dispositif de refroidissement périphérique est guidé et est dévié en forme de buse sur l'arbre (15) de l'outil.

8. Mandrin de serrage (10) conforme à la revendication 7,
**caractérisé en ce que**
des moyens de refroidissement prévus pour le dispositif de refroidissement périphérique sont guidés parallèlement le long de l'arbre et du tranchant de l'outil.

9. Mandrin de serrage (10) conforme à l'une des revendications 6 à 8,
**caractérisé en ce que**
le dispositif de serrage (18) et/ou la douille de réduction (12) comporte(nt) au moins une fente, au moins un perçage ou au moins une ouverture pour permettre le passage d'un fluide de refroidissement.

10. Mandrin de serrage (10) conforme à l'une des revendications précédentes,
**caractérisé en ce que**
le dispositif de fixation est un couvercle (13) équipé d'une ouverture de passage de l'arbre (15) de l'outil qui recouvre la face du mandrin (10) sur laquelle est prévue l'ouverture de réception de sorte que la douille de réduction (12) soit fixée dans le logement central, et, le couvercle (13) est fixé sur le corps (11) du mandrin (10).

11. Mandrin de serrage (10) conforme à la revendication 10,
**caractérisé en ce que**
le couvercle (13) est inamovible, et en particulier fixé sur le corps (11) du mandrin (10) par serrage, rétraction, soudage, brasage, ou encliquetage par une liaison par la forme.

12. Mandrin de serrage (10) conforme à la revendication 10 ou 11,
**caractérisé en ce que**
le couvercle (13) est réalisé en un matériau ayant une plus grande résistance que le corps (11) du mandrin (13) et/ou la douille de réduction (12).

13. Mandrin de serrage (10) conforme à l'une des revendications 10 à 12,
**caractérisé en ce que**
le couvercle (13) est doré, en particulier recouvert de TiN ou est en couleur contrastée.

14. Mandrin de serrage (10) conforme à l'une des revendications précédentes,
**caractérisé en ce qu'**
un élément de réglage permettant de régler la longueur du logement de réception d'outil est situé sur la douille de réduction (12) ou sur le corps de base du mandrin.
